# EUROPÄISCHE PATENTANMELDUNG

(11) **EP 3 176 475 A1**
(43) Veröffentlichungstag der Anmeldung: **07.06.2017**
(21) Anmeldenummer: 17151924.2
(22) Anmeldetag: 26.11.2007
(51) Int. Cl.: F16J 9/26, C23C 4/04

(54) **KOLBENRING MIT MEHRLAGENSCHICHTVERBAND UND VERFAHREN ZU DESSEN HERSTELLUNG**

(30) Priorität: 09.01.2007 DE 102007001377
(62) Teilanmeldung aus: 07846825.3
(71) Anmelder: Federal-Mogul Burscheid GmbH, 51399 Burscheid (DE)
(72) Erfinder: Schmidt, Peter, 51399 Burscheid (DE); Matz, Marc-Manuel, 86316 Friedberg (DE); Riedl, Johann, 86316 Friedberg (DE)
(74) Vertreter: Becker Kurig Straus

(57) **Zusammenfassung**

Die vorliegende Erfindung betrifft einen Kolbenring mit verbesserter Einlauf- und Verschleißeigenschaften sowie ein Verfahren zu deren Herstellung. Gemäß einer ersten Ausführungsform weist der Kolbenring einen Torus (2), eine Schicht aus einem Kupplungsmittel (4) aus einer Nickellegierung, die auf der Auflagefläche des Torus (2) durch thermisches Spritzen aufgebracht wird, eine anti-abrasive Schicht (6) aus einer MolybdänLegierung mit CrC, WC und MoC, die durch thermisches Spritzen auf die Schicht von Kopplungsmittel aufgebracht wird (4) und eine Einlaufschicht (8), die auf der Anti-Abriebschicht aufgebracht wird (6) durch thermisches Spritzen und die eine AICu-Legierung oder eine Nickel-Graphit-Legierung umfasst. Gemäß einer zweiten Ausführungsform weist der Kolbenring einen Torus, eine Anti-Abriebschicht, die auf der Auflagefläche des Torus angelegt wird, und eine Einlaufschicht, die auf der Anti-Abriebschicht aufgebracht wird und die umfaßt Nickel-Graphit.

## Beschreibung

Die vorliegende Erfindung betrifft einen Kolbenring und ein Verfahren zu dessen Herstellung, insbesondere einen Großkolbenring mit einer Mehrlagenbeschichtung für eine Verbrennungskraftmaschine.

Bei Kolbenringen wie beispielsweise denen von Hubkolben-Verbrennungskraftmaschinen sind zwei an sich gegensätzliche Anforderungen zu erfüllen. Zum einen muss eine hohe Verschleißfestigkeit gegeben sein, da anderenfalls, d.h. bei dünner werdendem Kolbenring, die Gasleckage und der Ölverbrauch zunehmen können sowie die Leistung des Motors sich verschlechtert. Durch einen sich abreibenden Kolbenring wird der Spalt zwischen Zylinderwand und Kolbenring immer größer, so dass Verbrennungsgase leichter an dem Ring vorbei austreten können (so genanntes Blow-By), was die Effizienz des Motors verringert. Durch einen vergrößerten Spalt wird weiterhin der im Verbrennungsraum zurückbleibende nicht abgestreifte Ölfilm dicker, so dass mehr Öl pro Zeiteinheit verloren gehen kann, also der Ölverbrauch erhöht wird.

Um möglichst optimale Motoreigenschaften zu erreichen, also den bestmöglichen Kompromiss zwischen maximaler Dichtwirkung und geringen Reibungsverlusten zu erreichen, muss daher die Dimension des Spaltes zwischen Kolbenring(en) und Zylinderwand möglichst genau eingehalten werden. Dies würde allerdings bei Herstellung und Zusammenbau des Motors aufwendige und teure Verfahrensschritte erfordern, da es ansonsten immer zu einem gewissen Grad an unvermeidlichen Toleranzen kommt. Eine eventuell geringfügig zu kleine Spaltdimension wird daher gewöhnlich in Kauf genommen, wobei dem Kolbenring weiter gestattet wird, durch Abrieb im Betrieb die optimale Dicke zu erreichen. Dabei reibt sich idealerweise die Lauffläche des Kolbenrings soweit ab, bis der optimale Spaltdurchmesser erreicht ist. Dieser Vorgang wird auch als Einlaufen bezeichnet.

Einerseits ist also ein möglichst verschleißfestes Material gewünscht, um zu erreichen, dass sich im regulären Betrieb der Kolbenring möglichst wenig abnutzt und der Spalt sich kaum vergrößert. Um gute Einlaufeigenschaften zu erreichen, muss aber zumindest ein Teil der Lauffläche im Verhältnis leichter abgerieben werden können, damit sich ein eventuell (z.B. aufgrund unvermeidlicher Bauteiltoleranzen) zu kleiner Spalt zwischen Kolbenring und Zylinderwand während dem Einlaufbetrieb möglichst rasch auf die richtige Dimension erweitern kann.

Prinzipiell werden Kolbenringe daher mit Beschichtungen versehen, welche die gewünschten Eigenschaften hervorbringen sollen. Dies ist naturgemäß einfacher zu handhaben und billiger, als den gesamten Kolbenring aus einem möglicherweise teuren Material mit den gewünschten Eigenschaften herzustellen. Bei solchen Beschichtungen kommt eine weitere Anforderung hinzu. Die Beschichtung muss neben der Bereitstellung der nötigen Eigenschaften auch so beschaffen sein, dass sie sich nicht von dem Kolbenring ablöst, also gute Adhäsion mit dem zugrunde liegenden Material aufweist. Sofern die Beschichtung aus mehreren unterschiedlichen Schichten besteht, ist ferner ein guter Zusammenhalt zwischen den Schichten erforderlich, also eine gute Kohäsion. Anderenfalls drohen Rissbildung oder Ablösung der Schichten, was für den Motor gefährlich sein kann.

Beschichtungen auf den Laufflächen von Kolbenringen müssen in dem mit der Zylinderwand in Berührung stehenden Oberflächenbereich verschleißfest sein. Darüber hinaus soll ihr Eigenverschleiß in der Einlaufphase für eine genügende Anpassung an die Gegenfläche ausreichen. Außerdem sollen diese Schichten eine hohe Ausbruchsicherheit haben und auch nach langen Laufzeiten kein oder nur ein geringes Ermüdungsverhalten zeigen.

Verschleißschutzschichten werden beispielsweise aus Hartchrom hergestellt. Die DE 199 31 829 A1 beschreibt eine galvanische Hartchromschicht für einen Kolbenring. Weitere Materialien für Verschleißschutzschichten sind Chrom mit Aluminiumoxidkeramik (z.B. CKS^{®} der Firma Federal-Mogul) oder Chrom mit Mirodiamant (z.B. GDC^{®} der Firma Federal-Mogul).

Auf CKS^{®}-Verschleißschutzschichten aufgebrachte Einlaufschichten basieren beispielsweise auf Molybdän, das mittels Drahtflammspritzens auf die Verschleißschutzschicht aufgebracht wird. Die Verschleißschutzschicht wird hierbei zuvor durch einen Strahlprozess aktiviert.

Weiterhin kann auf einer CKS^{®}-Verschleißschutzschicht durch thermisches Spritzen eine Einlaufschicht aus einer AlCuFe-Legierung aufgebracht werden. Hierzu muss auf die CKS^{®}-Verschleißschutzschicht jedoch zunächst eine galvanische Zwischenschicht aufgebracht werden.

Die Einlauf- und Verschleißeigenschaften von bekannten Kolbenringen mit einer auf Chrom basierenden Verschleißschutzschicht und einer darauf aufgebrachten Einlaufschicht bedürfen allerdings noch der Verbesserung.

Die vorliegende Erfindung hat die Aufgabe, einen Kolbenring mit verbessertem Einlauf- und Verschleißverhalten sowie ein Verfahren zu dessen Herstellung bereitzustellen.

Gemäß einer ersten Ausführungsform der Erfindung wird ein Kolbenring bereitgestellt, umfassend:
- einen Ringkörper;
- eine auf der Lauffläche des Ringkörpers durch thermisches Spritzen aufgebrachte Haftvermittlerschicht aus einer Ni-Legierung;
- eine auf der Haftvermittlerschicht durch thermisches Spritzen aufgebrachte Verschleißschutzschicht aus einer Mo-Legierung mit CrC, WC, MoC; und
- eine auf der Verschleißschutzschicht durch thermisches Spritzen aufgebrachte Einlaufschicht aus einer AlCu- Legierung oder Ni-Graphit-Legierung.

Der erfindungsgemäße Kolbenring stellt durch die Verwendung der drei unterschiedlichen Funktions-Schichten eine neue und vorteilhafte Kombination aus Verschleißfestigkeit (durch die Verschleißschutzschicht), günstigen Einlaufeigenschaften (durch die Einlaufschicht) sowie eine erhöhte Adhäsion/Kohäsion (durch die Haftvermittlerschicht) bereit. Die Einlaufschicht muss nicht nachbearbeitet werden, sondern erhält ihre endgültige Form durch den in der Einlaufphase erfolgenden Abrieb. Die Verschleißschutzschicht verhindert übermäßigen Verschleiß unter extremen Betriebsbedingungen des Motors. Die Haftvermittlerschicht sorgt für einen optimalen Halt der Schichten auf dem Träger bzw. Ringkörper.

Bevorzugt sind die Haftvermittlerschicht, die Verschleißschutzschicht und die Einlaufschicht in überspritzter Form aufgebracht.

Bevorzugt weist der Ringkörper Gasentlastungsschlitze auf, die an ihren Kanten eine Fase aufweisen.

Bevorzugt weist die Fase einen Winkel von 30° bis 70° auf. Weiterhin bevorzugt weist die Fase eine Breite von 0,5 bis 2,0 mm auf.

Gemäß einem weiteren Aspekt der Erfindung wird ein Verfahren zur Herstellung eines Kolbenrings gemäß der ersten Ausführungsform der Erfindung bereitgestellt, umfassend:
- Bereitstellen eines Ringkörpers;
- thermisches Aufspritzen einer Haftvermittlerschicht aus einer Ni-Legierung auf die Lauffläche des Ringkörpers;
- thermisches Aufspritzen einer Verschleißschutzschicht aus einer Mo-Legierung mit CrC, WC, MoC auf die Haftvermittlerschicht; und
- thermisches Aufspritzen einer Einlaufschicht aus einer AlCu- Legierung oder Ni-Graphit-Legierung auf die Verschleißschutzschicht.

Bevorzugt werden die Haftvermittlerschicht, die Verschleißschutzschicht und die Einlaufschicht in überspritzter Form aufgebracht.

Bevorzugt schließt das thermische Aufspritzen die folgenden Beschichtungsverfahren ein:
- ein Lichtbogendraht-Beschichtungsverfahren;
- ein Flamm-Beschichtungsverfahren;
- atmosphärisches Plasmaspritzen, APS; und
- Hochgeschwindigkeits-Flammspritzen, HOVF.

Bevorzugt umfasst das Verfahren weiter:
- Versehen der Flanke des Ringkörpers mit einer Fase an ihren Kanten, vor dem Aufspritzen der Haftvermittlerschicht.

Wenn der Ringkörper Gasentlastungsschlitze aufweist, umfasst das Verfahren bevorzugt weiter:
- Versehen der Gasentlastungsschlitze mit einer Fase an ihren Kanten, vor dem Aufspritzen der Haftvermittlerschicht.

Bevorzugt weist die Fase einen Winkel von 30° bis 70° auf. Weiterhin bevorzugt weist die Fase eine Breite von 0,5 bis 2,0 mm auf.
Fig. 1 zeigt den Schritt den Abfasens des Kolbenrings;
Fig. 2 zeigt schematisch Winkel und Breite der Fase;
Fig. 3 zeigt den Schritt des Aufspritzens der Haftvermittlerschicht; und
Fig. 4 zeigt den vollständig beschichteten Kolbenring gemäß der Erfindung.

Beschichtungen auf den Laufflächen von Kolbenringen müssen außer einer guten und temperaturfesten Haftung (Adhäsion) am Träger und einer guten und temperaturfesten Bindung innerhalb der Schicht (Kohäsion) auch in dem mit der Zylinderwand in Berührung stehenden Oberflächenbereich verschleißfest sein. Darüber hinaus soll ihr Eigenverschleiß in der Einlaufphase für eine genügende Anpassung an die Gegenfläche ausreichen. Darüber hinaus sollen diese Schichten eine hohe Ausbruchsicherheit haben und auch nach langen Laufzeiten kein oder nur ein geringes Ermüdungsverhalten zeigen.

Der vorliegenden Erfindung liegt daher die Aufgabe zugrunde, die Laufflächen von Kolbenringen mit durch ein Flammspritzverfahren aufgetragenen verschleißfesten Schichten zu versehen, die extremen Belastungen standhalten können, dabei aber ein gutes Einlaufverhalten zeigen. Das Verfahren der Herstellung der Schichten soll möglichst einfach und Kosten sparend sein, und vor allem soll es ermöglichen, die verschleißfesten Beschichtungen mit auf den jeweiligen Anwendungsfall abgestimmten Eigenschaften herzustellen.

Erfindungsgemäß wird diese Aufgabe in einer ersten Ausführungsform durch eine Beschichtung gelöst, welche aus mindestens drei übereinander liegenden unterschiedlichen Spritzschichten besteht: einer Haftvermittlerschicht, einer darüber liegenden Verschleißschutzschicht, und einer äußeren Einlaufschicht. Durch entsprechende Abfasung von Kanten an Ringflanke und Gasentlastungsschlitzen vor der Beschichtung können Adhäsion und Kohäsion weiter verbessert werden.

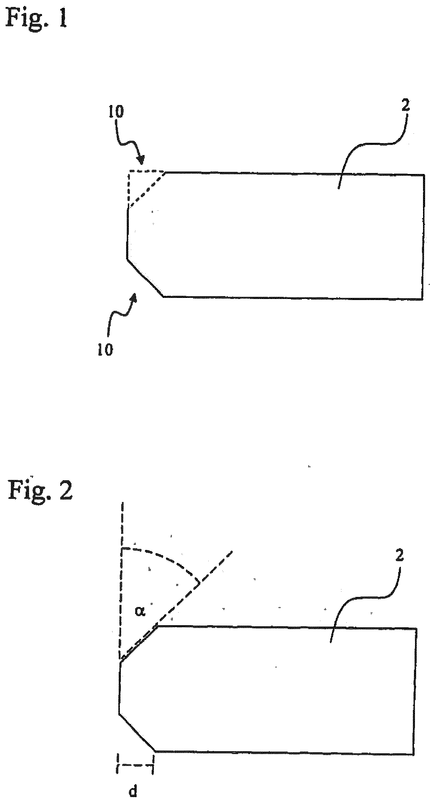

In Fig. 1 ist in einer Querschnittsansicht gezeigt, wie der Kolbenring abgefast wird. Auf der Laufflächen-Seite (in der Figur links) können gemäß der Erfindung vor der Beschichtung die Kanten des Kolbenrings 2 mit einer Fase 10 versehen werden. Der Winkel α der Fase 10 .kann gemäß der Erfindung zwischen 30° und 70° liegen, wobei in Fig. 2 beispielhaft ein Winkel von 45° gezeigt ist. Weiterhin kann die Fase 10 gemäß verschiedener Ausführungsformen der Erfindung eine Breite d von 0,5 bis zu 2 mm aufweisen. Das Abfasen von Kanten ist ein optionaler Schritt bei der Herstellung des Kolbenrings bzw. die Fase ist ein optionales Merkmal beim fertigen Kolbenring gemäß der Erfindung. Das. Abfasen kann mit jedem geeigneten bekannten Verfahren ausgerührt werden.

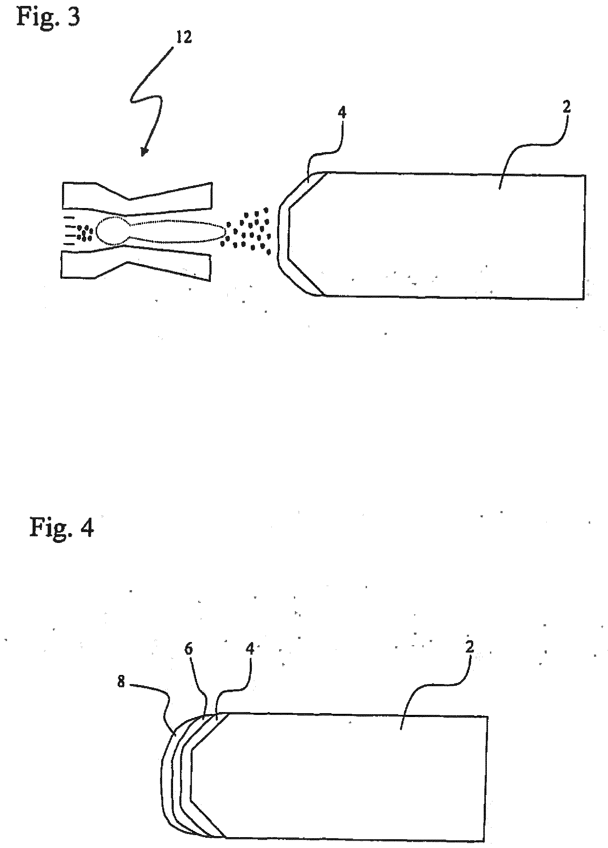

Fig. 3 zeigt in einer Querschnittsansicht den Schritt des Aufbringens der ersten Lage der Beschichtung. Auf den Ringkörper 2 wird eine Haftvermittlerschicht 4 aufgebracht. Dies geschieht gemäß der Erfindung mittels einem thermischen Spritzverfahren, einschließlich Hochgeschwindigkeits-Flammspritzen (High Velocity Oxy-Fuel, HVOF), atmosphärisches Plasmaspritzen (APS), Lichtbogendraht- oder Drahtflammbeschichtungsverfahren.

Beispielhaft ist dies durch eine HVOF-Einrichtung 12 dargestellt. Die Haftvermittlerschicht 4 ist eine Nickel-Legierung.

In weiteren Schritten (nicht in den Figuren gezeigt) werden dann eine Verschleißschutzschicht sowie eine Einlaufschicht über der Haftvermittlerschicht aufgebracht. Dies kann ebenso wie das Aufbringen der Haftvermittlerschicht durch eines der vorstehend genannten thermischen Spritzverfahren erfolgen, wobei auch verschiedene Verfahren für jeweils verschiedene Schichten zum Einsatz kommen können. Das Schichtdesign ist FF, das heißt überspritzt.

Die Verschleißschutzschicht ist gemäß der ersten Ausführungsform der Erfindung eine Molybdän-Legierung mit Chromkarbid CrC, Wolframkarbid WC oder Molybdänkarbid MoC.

Die zuletzt aufgebrachte Einlaufschicht wird an deren Oberfläche nicht nachbearbeitet, sondern erhält ihre endgültige Form während der Einlaufphase des Motors durch Abrieb.

In Fig. 4 ist der fertige Kolbenring gemäß der ersten Ausführungsform der Erfindung in einer Querschnittsansicht dargestellt, umfassend den Ringkörper 2, die Haftvermittlerschicht 4, die Verschleißschutzschicht 6 und die Einlaufschicht 8.

Gemäß einer zweiten Ausführungsform der vorliegenden Erfindung umfasst ein Kolbenring einen Ringkörper, eine auf der Lauffläche des Ringkörpers aufgebrachte Verschleißschutzschicht und eine auf der Verschleißschutzschicht aufgebrachte Einlaufschicht. Die Einlaufschicht umfasst Nickel-Graphit (Ni-C Legierung). Bei dem Kolbering handelt es sich bevorzugt um einen Großkolbenring für eine Verbrennungskraftmaschine.

Der Kolbenring gemäß der zweiten Ausführungsform der Erfindung stellt durch die Verwendung der beiden unterschiedlichen Funktionsschichten eine neue und vorteilhafte Kombination aus Verschleißfestigkeit (durch die Verschleißschutzschicht) und günstigen Einlaufeigenschaften (durch die Einlaufschicht aus Nickel-Graphit) bereit. Die Einlaufschicht muss nicht nachbearbeitet werden, sondern erhält ihre endgültige Form durch den in der Einlaufphase erfolgenden Abrieb. Die Verschleißschutzschicht verhindert übermäßigen Verschleiß unter extremen Betriebsbedingungen des Motors.

Bevorzugt umfasst die Verschleißschutzschicht Hartchrom, Chrom mit Aluminiumoxidkeramik (z.B. CKS^{®} der Firma Federal-Mogul) oder Chrom mit Mirodiamant (z.B. GDC^{®} der Firma Federal-Mogul).

Die Einlaufschicht hat bevorzugt eine Schichtdicke von 20 bis 400 µm. Weiterhin hat die Einlaufschicht bevorzugt einen Graphitgehalt von 10 bis 40 Vol.-%.

Gemäß einem weiteren Aspekt der Erfindung wird ein Verfahren zur Herstellung eines Kolbenrings gemäß der zweiten Ausführungsform der Erfindung bereitgestellt. Dieses umfasst die Schritte:
- Bereitstellen eines Ringkörpers;
- Auftragen einer Verschleißschutzschicht auf die Lauffläche des Ringkörpers;
- Aktivieren der Verschleißschutzschicht; und
- Auftragen einer Einlaufschicht auf die Verschleißschutzschicht.

Die Einlaufschicht umfasst dabei Nickel-Graphit.

Bevorzugt erfolgt das Auftragen der Verschleißschutzschicht durch ein thermisches Spritzverfahren. Bevorzugt handelt es sich bei dem thermischen Spritzverfahren um atmosphärisches Plasmaspritzen (APS, z.B. MKP) oder Hochgeschwindigkeits-Flammspritzen (HOVF, z.B. MKJet^{®} der Firma Federal-Mogul).

Bevorzugt umfasst die Verschleißschutzschicht Hartchrom, Chrom mit Aluminiumoxidkeramik (z.B. CKS^{®} der Firma Federal-Mogul) oder Chrom mit Mirodiamant (z.B. GDC^{®} der Firma Federal-Mogul).

Bevorzugt wird die Verschleißschutzschicht durch einen Strahlprozess oder thermisch aktiviert.

Das Auftragen der Einlaufschicht erfolgt bevorzugt durch ein thermisches Beschichtungsverfahren. Bei dem thermischen Beschichtungsverfahren handelt es sich bevorzugt um atmosphärisches Plasmaspritzen (APS, z.B. MKP) oder Hochgeschwindigkeits-Flammspritzen (HOVF, z.B. MKJet^{®} der Firma Federal-Mogul).

Die Einlaufschicht hat bevorzugt eine Schichtdicke von 20 bis 400 µm. Weiterhin hat die Einlaufschicht bevorzugt einen Graphitgehalt von 10 bis 40 Vol.-%.

## Patentansprüche

1. Kolbenring, umfassend:
- einen Ringkörper (2);
- eine auf dem Ringkörper (2) durch thermisches Spritzen aufgebrachte Verschleißschutzschicht (6); und
- eine auf der Verschleißschutzschicht (6) durch thermisches Spritzen aufgebrachte Einlaufschicht (8) aus einer AlCu-Legierung oder Ni-Graphit-Legierung.

2. Kolbenring nach Anspruch 1, wobei die Verschleißschutzschicht eine Mo-Legierung mit Chromkarbid umfasst oder eine Mo-Legierung mit Chromkarbid, Wolframkarbid oder Molybdänkarbid umfasst.

3. Kolbenring nach Anspruch 1 oder 2, wobei die Einlaufschicht eine AlCu-Legierung umfasst.

4. Kolbenring nach einem der vorhergehenden Ansprüche, wobei die Verschleißschutzschicht (6) und die Einlaufschicht (8) in überspritzter Form aufgebracht sind.

5. Kolbenring nach einem der vorhergehenden Ansprüche, wobei die Flanke des Ringkörpers an ihren Kanten eine Fase aufweist, wobei die Fase vorzugsweise einen Winkel von 30° bis 70° und/oder eine Breite von 0,5 bis 2,0 mm aufweist.

6. Kolbenring nach einem der vorhergehenden Ansprüche, wobei der Ringkörper Gasentlastungsschlitze aufweist, die an ihren Kanten eine Fase aufweisen, wobei die Fase vorzugsweise einen Winkel von 30° bis 70° und/oder eine Breite von 0,5 bis 2,0 mm aufweist.

7. Kolbenring nach einem der vorhergehenden Ansprüche, wobei der Kolbenring ein Großkolbenring ist.

8. Verfahren zum Herstellen eines Kolbenring :
- Bereitstellen eines Ringkörpers (2);
- thermisches Aufspritzen einer Verschleißschutzschicht (6) auf dem Ringkörper (2); und
- thermisches Aufspritzen einer Einlaufschicht (8) aus einer AlCu-Legierung oder Ni-Graphit-Legierung.auf die Verschleißschutzschicht (6)

9. Verfahren nach Anspruch 8, wobei die Verschleißschutzschicht eine Mo-Legierung mit Chromkarbid umfasst, oder eine Mo-Legierung mit Chromkarbid, Wolframkarbid oder Molybdänkarbid umfasst.

10. Verfahren nach Anspruch 8 oder 9, wobei die Einlaufschicht eine AlCu-Legierung umfasst.

11. Verfahren nach einem der Ansprüche 8 bis 10, wobei die Verschleißschutzschicht und die Einlaufschicht in überspritzter Form aufgebracht werden.

12. Verfahren nach einem der Ansprüche 8 bis 11, wobei das thermische Aufspritzen einschließt:
- ein Lichtbogendraht-Beschichtungsverfahren;
- ein Drahtflamm-Beschichtungsverfahren;
- atmosphärisches Plasmaspritzen, APS; und
- Hochgeschwindigkeits-Flammspritzen, HOVF.

13. Verfahen nach einem der Ansprüche 8 bis 12, weiter umfassend:
- Versehen der Flanke des Ringkörpers mit einer Fase an ihren Kanten, wobei die Fase vorzugsweise einen Winkel von 30° bis 70° und/oder Fase eine Breite von 0,5 bis 2,0 mm aufweist.

14. Verfahen nach einem der Ansprüche 8 bis 13, wobei der Ringkörper Gasentlastungsschlitze aufweist, weiter umfassend:
- Versehen der Gasentlastungsschlitze mit einer Fase an ihren Kanten, wobei die Fase vorzugsweise einen Winkel von 30° bis 70° und/oder eine Breite von 0,5 bis 2,0 mm aufweist.
